Europäisches Patentamt

European Patent Office

Office européen des brevets

(19)

(11) Numéro de publication : **0 352 175 B1**

# FASCICULE DE BREVET EUROPEEN

(12)

(45) Date de publication du fascicule du brevet :
**29.01.92 Bulletin 92/05**

(51) Int. Cl.[5] : **C10G 35/12, B01J 8/12**

(21) Numéro de dépôt : **89402012.2**

(22) Date de dépôt : **13.07.89**

(54) **Procédé et appareillage de réformage basse pression des essences avec chauffage par des gaz de fumées.**

(30) Priorité : **22.07.88 FR 8810039**

(43) Date de publication de la demande :
**24.01.90 Bulletin 90/04**

(45) Mention de la délivrance du brevet :
**29.01.92 Bulletin 92/05**

(84) Etats contractants désignés :
**BE DE GB IT NL**

(56) Documents cités :
**EP-A- 0 269 171**
**DE-A- 3 410 592**
**US-A- 3 907 665**

(73) Titulaire : **INSTITUT FRANCAIS DU PETROLE**
**1 et 4 Avenue de Bois-Préau BP 311**
**F-92506 Rueil Malmaison Cédex (FR)**

(72) Inventeur : **Dang Vu, Quang**
**48 bis, Boulevard du Général Leclerc**
**F-92200 Neuilly (FR)**
Inventeur : **Bournonville, Jean-Paul**
**43, rue des Groues Vauréal**
**F-9500 Cergy Pontoise (FR)**
Inventeur : **Mank, Larry**
**207, rue de Piquenard**
**F-78630 Orgeval (FR)**
Inventeur : **Viltard, Jean-Charles**
**31, avenue Saint Germain**
**F-78160 Marly Le Roi (FR)**

EP 0 352 175 B1

## Description

L'invention concerne un procédé de réformage des essences, sous basse pression, en présence d'au moins un catalyseur, procédé dans lequel la chaleur nécessaire à la réaction est apportée par un fluide caloporteur à base de fumées provenant, par exemple, d'une combustion de l'air avec un mélange d'hydrocarbures, par exemple du gaz naturel ou du gaz de raffinerie.

L'invention est également relative à l'appareillage dans lequel ledit procédé peut être mise en oeuvre.

Il est connu d'améliorer la qualité des essences, et notamment leur indice d'octane, par un réformage aux environs de 500°C, en présence d'hydrogène, au sein de plusieurs lits catalytiques solides à base de métaux précieux activés par divers additifs, tels que le rhénium et l'iridium par exemple (brevets US-A-4588495, FR-B-2593824, FR-B-2597496, FR-B-2600668).

Le réformage des essences résulte d'un ensemble de réactions dont le bilan est globalement endothermique et on assiste habituellement à une chute de la température réactionnelle au fur et à mesure de la progression des transformations.

Le procédé de réformage traditionnel des essences comporte trois, et généralement quatre, réacteurs adiabatiques, disposés en série et reliés entre eux par deux, et généralement trois, fours de réchauffage, dont le rôle est de réchauffer les réactifs et d'amener et maintenir ainsi leur température dans la fourchette souhaitée de température réactionnelle.

L'application des normes antipollution conduit à une diminution de la concentration en plomb dans les essences et aboutira à terme à la suppression des additifs organo-plombiques dans les carburants automobiles pour moteurs à allumage commandé. Cette règlementation impose aux raffineurs une augmentation de la sévérité des conditions opératoires de fonctionnement des unités de réformage afin de satisfaire aux critères de qualité requis pour un fonctionnement satisfaisant des moteurs automobiles : ainsi, les raffineurs sont amenés à réduire de plus en plus la pression opératoire de ces unités de réformage. En effet, si on augmente la sévérité des conditions de fonctionnement, en particulier l'indice d'octane des produits de réformage, le rendement chute et le seul moyen de compenser cette baisse de rendement est de fonctionner à une pression plus basse.

Mais ce fonctionnement à basse pression coûte cher et R.G. Mc Clung et al ont récemment montré (Hydrocarbon Processing, septembre 1983, pages 80-84) qu'un tel système ne peut pas réellement descendre en deça de la limite de 1 MPa sans de sérieux inconvénients.

L'obstacle majeur est dû en particulier à la perte de charge (par exemple 0,4-0,5 MPa) de l'unité construite à partir d'un tel système réactionnel.

Or, la demanderesse a trouvé qu'il est possible de réduire considérablement cette perte de charge et de réaliser le réformage sous une pression n'excédant pas 2 MPa, de préférence 1 MPa.

Le procédé selon l'invention est en particulier basé sur l'utilisation d'un système réactionnel où la chaleur nécessaire à la réaction est apportée au(x) lit(s) catalytique(s) par un fluide caloporteur à base de fumées (ou gaz de chauffe).

Ainsi, le réformage selon l'invention est réalisé dans une ou deux zones de réaction dont l'une au moins renferme des canaux (ou espaces) échangeurs de chaleur, de préférence sensiblement parallélépipèdiques, à l'intérieur desquels circule le fluide caloporteur à base de fumées de chauffe, ainsi qu'il sera expliqué plus loin en détail.

A titre indicatif, une des charges d'hydrocarbures à réformer peut contenir généralement, en volume, 35 à 80% d'hydrocarbures paraffiniques, 14 à 51% d'hydrocarbures naphténiques et 2 à 18% d'hydrocarbures aromatiques. Elle est formée en général essentiellement d'essences. Cette charge est par exemple un naphta distillant entre environ 55 et environ 225°C.

Le réformage selon l'invention est réalisé sur un mélange de ladite charge et d'hydrogène recyclé (ou "hydrogène de recyclage"), dans une proportion telle que le rapport molaire hydrogène sur charge d'hydrocarbures à traiter (H2/HC) est habituellement compris entre environ 1 et 100, de préférence entre environ 2 et 10.

Le réformage s'effectue à une température usuellement comprise entre environ 300 et 700°C, de préférence entre environ 400 et 600°C.

On peut utiliser tout catalyseur de réformage connu de l'homme de l'art, conditionné en grains par exemple sensiblement sphériques.

On emploiera par exemple des catalyseurs supportés à base d'au moins un métal noble du groupe VIII de la classication périodique des éléments, généralement le platine, de préférence dopé par au moins un promoteur tel que l'indium, le germanium, l'iridium (US-A-2848377), le rhénium (US-A-3415737), l'étain (US-A-3700588). Généralement, on incorpore aux catalyseurs un halogène tel que le chlore ou le fluor (FR-B-2600668).

Les supports des catalyseurs sont usuellement choisis parmi les oxydes des métaux des groupes II, III et/ou IV de la classification périodique des éléments, tels que, par exemple, les oxydes de magnesium, d'aluminium, de titane, de zirconium, de thorium ou de silicium, pris seuls ou en mélange entre eux ou avec des oxydes d'autres éléments de la classification périodique, tels que par exemple le bore. On peut utiliser aussi du charbon. On peut également utiliser des zéolites ou tamis moléculaires de type X ou Y, ou de type mordénite ou faujasite ou de type ZSM-5, ZSM-4, ZSM-8 L, etc... ainsi que des mélanges d'oxydes de métaux des groupes II, III et/ou IV avec du matériel zéolitique.

D'une manière préférée, on emploie un support formé principalement d'alumine, c'est-à-dire dont l'alumine représente au moins 50% en poids par rapport au poids total du support et de préférence au moins 80% en poids, et d'une manière la plus préférée, on emploie de l'alumine seule.

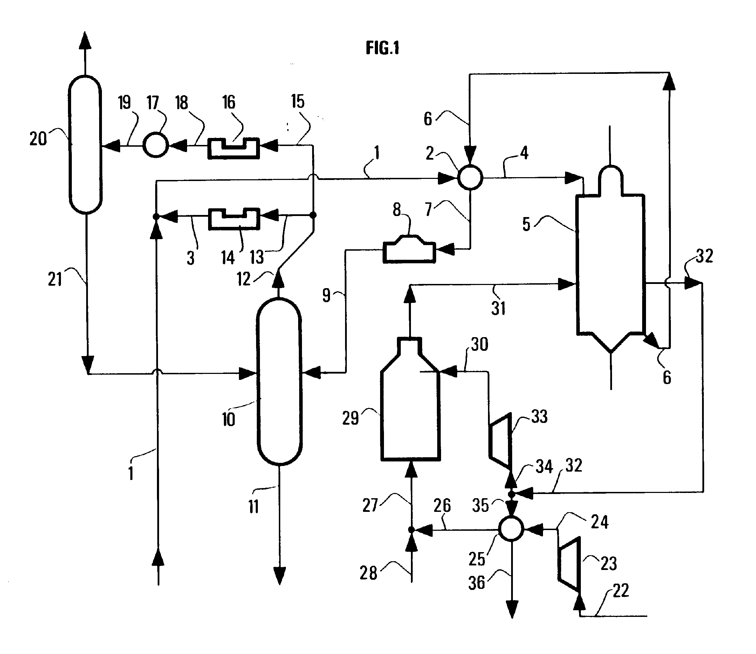

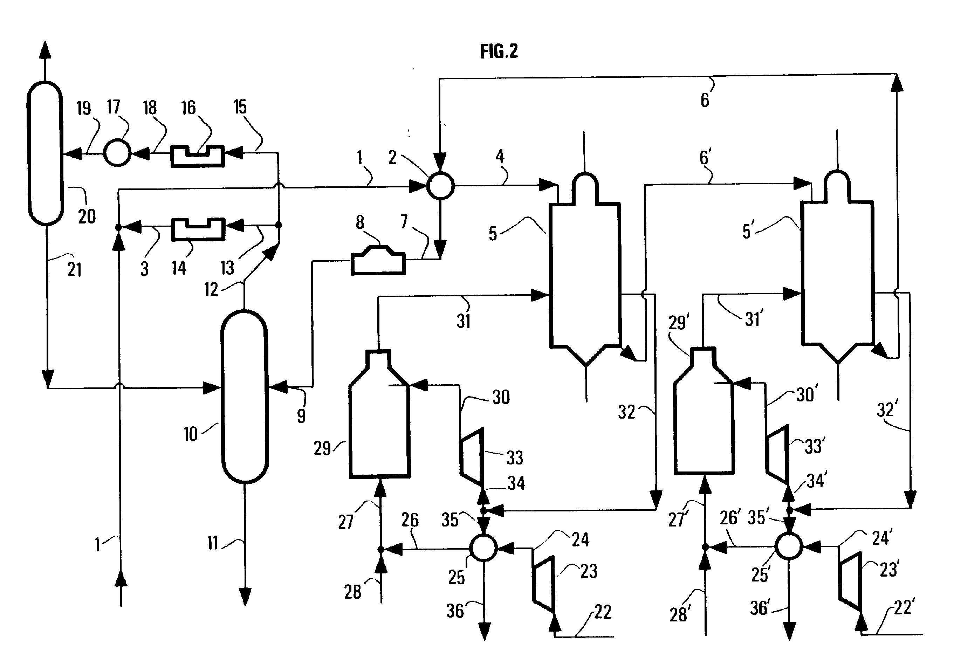

Les figures 1 et 2, données à titre d'exemples, illustrent des exemples de mise en oeuvre de l'invention, où le réformage a lieu dans un seul réacteur (figure 1) ou dans deux réacteurs placés en série (figure 2).

La charge d'hydrocarbures à traiter, de préférence désulfurée, par exemple un mélange d'essences provenant de la distillation directe de pétrole brut et/ou de la distillation de produits de pétrole craqué thermiquement ou catalytiquement, est envoyée dans le conduit 1 de l'unité de réformage où elle se mélange avec de l'hydrogène qui est amené par le conduit 3 dans un rapport généralement d'environ 1 à 100, de préférence d'environ 2 à 10 moles d'hydrogène par mole de charge d'hydrocarbures à traiter.

Le mélange ainsi formé qui se trouve alors conformément à l'invention sous une pression comprise entre 0,05 et 2,0 MPa, de préférence entre 0,05 et 1,0 MPa, est ensuite de préférence indirectement préchauffé par de l'effluent réactionnel chaud (provenant de la conduite 6) à travers l'échangeur de chaleur 2 habituellement jusqu'à une température comprise entre environ 300 et 700°C, avantageusement entre environ 400 et 600°C.

Ledit mélange passe ensuite, par le conduit 4, dans le réacteur 5 conforme à l'invention et décrit postérieurement, ledit réacteur contenant un catalyseur de réformage défini précédemment.

Dans le réacteur 5, les essences sont réformées, leurs molécules étant au moins partiellement transformées au moyen de réactions de déshydrogénation, d'isomérisation, éventuellement de déshydrocyclisation et de craquage, en des composés aux propriétés anti-détonnantes nettement améliorées.

Ces réactions résultent en une grande production d'hydrogène et une forte demande calorifique.

Dans les unités classiques à réacteurs adiabatiques, l'endothermicité des réactions fait chuter rapidement la température et, pour poursuivre les opérations de réformage, il est alors nécessaire de réaliser au moins un réchauffage intermédiaire, en envoyant les réactifs sur un ou plusieurs fours extérieurs.

Les procédés de l'invention sont caractérisés en ce que l'on apporte directement au sein du réacteur, au moyen d'un fluide caloporteur à base de fumées (ou gaz de chauffe), par exemple en provenance de la combustion à l'air de mélanges liquides ou gazeux d'hydrocarbures, tels que du gaz naturel, du gaz de raffinerie, circulant entre les lits de catalyseur contenus dans le réacteur 5 (et, éventuellement, dans le réacteur 5′, dans le cas de deux réacteurs, comme indiqué sur la figure 2), de la chaleur nécessaire aux réactions de réformage. Le circuit du fluide caloporteur n'est pas ouvert sur le système réactionnel.

Pour éviter une trop grande accumulation de coke, le catalyseur peut être constamment renouvelé ; pour cela, du catalyseur usé est par exemple soutiré en continu vers le bas du réacteur 5 et continuellement remplacé par du catalyseur frais (et/ou régénéré) introduit vers le sommet du réacteur 5 (fonctionnement appelé en lit mobile).

Selon une forme de réalisation de l'invention (voir figure 1), le système réactionnel ne comporte qu'un seul réacteur (5), l'effluent réactionnel sortant dudit réacteur par le conduit 6 pour venir préchauffer le mélange (hydrocarbures + hydrogène) à travers l'échangeur 2.

D'une manière parfois avantageuse, ceci en fonction des desiderata du raffineur, le réacteur 5 est suivi d'un deuxième réacteur 5′, soit du même type que le réacteur 5 (voir figure 2), soit de type adiabatique ; l'effluent réactionnel sortant de 5 pénètre dans 5′ par le conduit 6′. En sortie du réacteur 5′, l'effluent réactionnel passe dans la conduite 6 qui le dirige sur l'échangeur 2 où il va préchauffer le mélange (hydrocarbures + hydrogène).

Il est avantageux de fonctionner dans le deuxième réacteur (5′) à une température moyenne supérieure de 5 à 100°C, de préférence de 10 à 50°C, à la température régnant dans le premier réacteur (5).

Ce second réacteur 5′ peut être adiabatique. Mais il est souhaitable qu'il soit formé d'un réacteur isotherme du même type que le réacteur 5, la chaleur nécessaire aux réactions de réformage étant apportée directement au sein dudit réacteur 5′ également au moyen d'un fluide caloporteur à base de fumées (ou gaz de chauffe), par exemple en provenance de la combustion à l'air de mélanges liquides ou gazeux d'hydrocarbures, circulant entre les lits de catalyseur contenus dans le réacteur 5′ (ce fluide caloporteur étant identique ou non à celui circulant dans le réacteur 5).

Ce deuxième réacteur 5′ peut aussi fonctionner en lits mobiles ; pour cela, du catalyseur usé est par exemple soutiré en continu vers le bas du réacteur 5′ et continuellement remplacé par du catalyseur frais (ou/et régénéré) introduit vers le sommet dudit réacteur 5′.

Dans l'échangeur 2 (figure 1 ou 2), l'effluent réactionnel se refroidit et les essences, dont le nombre d'octane recherché (NOR) a été porté aux environs de 100, sont au moins partiellement condensées.

3

Cet effluent est ensuite amené par le conduit 7 dans le condenseur final 8 où les essences achèvent de se condenser.

A la sortie de 8, l'efflent passe par la conduite 9 dans le séparateur 10 qui permet de séparer le réformat d'un mélange gazeux riche en hydrogène.

Du fond du séparateur 10, on soutire les essences obtenues qui forment le réformat par le conduit 11, et on les amène de préférence vers une zone de stabilisation (non représentée sur les figures).

Le mélange gazeux riche en hydrogène sort du séparateur 10 par le conduit 12 situé vers son sommet. On récupère de l'hydrogène par le conduit 13 et on le recycle dans le conduit 3 à l'aide du compresseur 14.

Des gaz excédentaires formés par les réactions dans 5 (et éventuellement dans 5') sortent par le conduit 15, sont comprimés par le compresseur 16 et sont sous-refroidis dans l'échangeur 17 qu'ils rejoignent par le conduit 18.

De l'échangeur 17, les gaz et leurs condensats passent par le conduit 19 dans un ballon séparateur 20 où se fait la séparation hydrogène-condensats. Ces derniers sont récupérés et renvoyés par le conduit 21 dans le ballon 10.

Dans le réacteur 5 (voir figures 1 ou 2), la chaleur nécessaire aux réactions de réformage est, comme nous l'avons vu précédemment, apportée par un fluide caloporteur à base de fumées (ou gaz de chauffe ou gaz de fumées).

A cet effet, de l'air est aspiré par le conduit 22 dans un ventilateur 23 qui envoie l'air, par le conduit 24, sur un préchauffeur récupérateur d'air 25, où il est porté à une température comprise habituellement entre 60 et 300°C, de préférence entre 100 et 250°C.

Cet air préchauffé passe ensuite par le conduit 26 dans un brûleur 27 (zone de brûlage), contenu dans un four 29 (ou zone de chauffage), où il sert de carburant à un mélange d'hydrocarbures, par exemple du gaz naturel, amené par le conduit 28.

La quantité d'air utilisée est avantageusement comprise entre 1 et 5 fois, de préférence entre 1,1 et 3,2 fois la quantité d'air stoechiométrique nécessaire à la combustion du mélange d'hydrocarbures utilisé.

Le four 29 peut être par exemple une simple chambre de combustion, ou une chaudière qui fonctionne par radiation et qui produit éventuellement de la vapeur surchauffée.

A la sortie du four 29, la température des gaz de fumées (ou gaz de chauffe) est préférentiellement réglée à une température comprise le plus souvent entre 400 et 900°C, de préférence entre 450 et 750°C, au moyen d'un recyclage des gaz de chauffe effectué par le conduit 30.

Selon les procédés de l'invention, le taux de recyclage desdits gaz de chauffe (rapport pondéral gaz de chauffe recyclés (34) sur gaz de chauffe soutirés et non recyclés (35)) est alors utilement compris entre environ 0,5 et environ 200, de préférence entre environ 2 et environ 50.

Ces gaz de chauffe entrent dans le réacteur 5 par le conduit 31 et en sortent par le conduit 32.

De 32, ils sont partiellement aspirés par le ventilateur 33 à travers le conduit 34 puis recyclés par le conduit 30 dans le four 29. Le reste des gaz de chauffe non aspiré par 33 emprunte le conduit 35 pour être refroidi par l'air de combustion frais à travers l'échangeur 25. Il est ensuite évacué par le conduit 36.

Dans le cas où on utilise un deuxième réacteur (5') du même type que le premier réacteur (5) (voir figure 2), la chaleur nécessaire aux réactions de réformage dans le réacteur 5' peut également être apportée par un fluide caloporteur à base de fumées (ou gaz de fumées ou gaz de chauffe). La formation et le cheminement du caloporteur sont par exemple analogues à ceux décrits précédemment dans le cas du réacteur 5, avec l'emploi d'équipements 22' à 36' semblables aux équipements 22 à 36.

La description qui suit ne fait référence, pour simplifier, qu'au réacteur 5 de la figure 1, mais elle peut s'appliquer également au réacteur 5' (quand 5 et 5' sont analogues) de la figure 2.

La figure 3 illustre un modèle préféré de réacteur utilisable notamment dans les procédés de réformage selon l'invention, ce modèle correspondant au réacteur 5 (et, éventuellement, au réacteur 5').

La figure 4 illustre un des dispositifs essentiels contenus dans le réacteur 5 : une cellule réactionnelle catalytique élémentaire.

La figure 5 correspond à la coupe horizontale AA du réacteur de la figure 3.

La figure 6 représente une coupe verticale du réacteur de la figure 3, coupe effectuée dans l'espace (ou le canal) compris entre deux cellules réactionnelles catalytiques élémentaires voisines.

La figure 7 correspond à une coupe verticale du réacteur de la figure 3, coupe effectuée dans une cellule réactionnelle catalytique élémentaire.

La figure 8 donne à titre d'exemple des profils de conduits utilisables dans les espaces ou canaux compris entre deux cellules réactionnelles catalytiques élémentaires voisines.

Sur les figures, les flèches épaisses C représentent le cheminement de la charge (et de la charge traitée) et les flèches fines G le cheminement des gaz de chauffe.

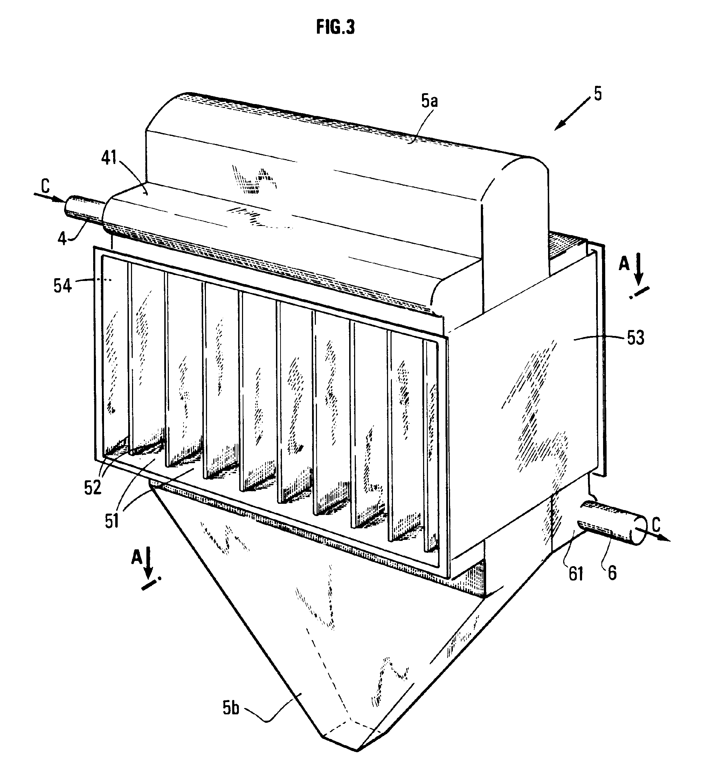

L'invention a pour objet (voir figures 3 à 7) un réacteur pour effectuer notamment des réactions de réfor-

4

mage des essences comportant au moins un moyen d'introduction d'une charge généralement liquide (4), au moins un moyen d'évacuation de la charge traitée (6), des moyens d'entrée et de soutirage d'un solide pulvérulent, par exemple un catalyseur ; dans le cas où le réacteur est à lit(s) mobile(s), on utilise au moins un moyen d'introduction en continu de catalyseur frais (5a) à la partie supérieure dudit réacteur et au moins un moyen d'évacuation en continu du catalyseur usé (5b) à la partie inférieure dudit réacteur.

Le ou les moyens éventuels d'évacuation (5b) du solide pulvérulent (on écrira catalyseur dans la suite de la description) peuvent comporter au moins un entonnoir de soutirage, de forme conique ou pyramidale, dont le sommet pointe vers le bas, sommet contenant une ouverture suffisamment grande pour évacuer le catalyseur usé hors du réacteur.

Le réacteur selon l'invention est caractérisé en ce qu'il comporte au moins deux cellules réactionnelles catalytiques élémentaires (52) non adjacentes entre elles et non adjacentes aux parois sensiblement verticales (53, 54) dudit réacteur.

Lesdites cellules sont sensiblement verticales et parallélépipèdiques, sensiblement parallèles entre elles (et aux parois 53 et 54 dudit réacteur).

Chaque canal ou espace interne creux (échangeur de chaleur) (51) sensiblement parallélépipèdique situé entre deux cellules (52) ou situé entre une paroi sensiblement verticale (53 ou 54) du réacteur et la cellule (52) la plus proche de cette paroi et sensiblement parallèle à ladite paroi, est destiné à la circulation des gaz de chauffe. Ainsi chaque cellule (52) se trouve prise en sandwich entre deux espaces libres de catalyseur. Ces espaces ou canaux (51) sont ouverts sur toutes leurs "faces" sensiblement perpendiculaires aux parois latérales sensiblement verticales (53 et 54) du réacteur, afin de permettre l'entrée d'un caloporteur à base de gaz de chauffe dans le réacteur, puis sa circulation entre les cellules (52) et enfin son évacuation hors du réacteur.

Chaque cellule réactionnelle catalytique élémentaire (52) est composée de trois enceintes sensiblement parallélépipèdiques définies ci-après :
— un distributeur individuel de la charge (52.1),
— un collecteur individuel de la chargef traitée (52.3),
— un lit catalytique (mobile par exemple) (52.2), inséré entre ledit distributeur individuel et ledit collecteur individuel.

Ledit lit (52.2) est ouvert, sur toute une face mince sensiblement verticale $F_1$, sur ledit distributeur individuel (52.1) et ouvert, sur toute l'autre face mince $F'_1$ sensiblement parallèle à $F_1$ sur ledit collecteur individuel (52.3). Ces faces minces $F_1$ et $F_1$ sont définies chacune par une paroi perméable aux fluides et imperméable aux particules catalytiques solides (par exemple, une grille de type Johnson ou à base de fils profilés ou tout autre moyen équivalent).

Chacune des deux faces larges sensiblement verticales dudit lit (52.2) est fermée par une paroi étanche dont les prolongements au-delà dudit lit (52.2) forment des parois étanches du distributeur individuel (52.1) et du collecteur individuel (52.3) correspondants.

Les faces ou parois des cellules réactionnelles catalytiques élémentaires (52) sont par exemple fabriquées à partir de tôles minces plates ou tous moyens équivalents.

Dans le cas où chaque lit (52.2) est mobile, celui-ci communique, par sa face mince supérieure sensiblement horizontale $F_2$, avec le (ou les) moyen(s) d'introduction de catalyseur frais (5a) et, par sa face mince inférieure sensiblement horizontale $F'_2$ avec le (ou les) moyen(s) d'évacuation du catalyseur usé (5b).

Le réacteur selon l'invention renferme en outre :
— au moins un distributeur général de la charge (41), relié au(x) moyen(s) d'introduction de la charge (4) et à tous les distributeurs individuels de la charge (52.1) par une de leurs faces minces sensiblement horizontales, et
— au moins un collecteur général de la charge traitée (61), relié au(x) moyen(s) d'évacuation de la charge traitée (6) et à tous les collecteurs individuels de la charge traitée (52.3) par une de leurs faces minces sensiblement horizontales qui est sensiblement diagonalement opposée, par rapport au centre du lit catalytique (52.2) correspondant, à la face mince sensiblement horizontale du distributeur individuel (52.1) correspondant par laquelle celui-ci est relié au distributeur général (41).

Ledit réacteur renferme également :
— au moins une paroi étanche reliant entre eux les côtés supérieurs sensiblement horizontaux des faces larges en regard de deux lits catalytiques (52.2) voisins,
— au moins une paroi étanche reliant entre eux les côtés inférieurs sensiblement horizontaux desdites faces larges en regard de deux lits catalytiques (52.2) voisins,
— au moins une paroi étanche reliant le côté supérieur sensiblement horizontal de la face large du lit catalytique (52.2) le plus proche de chaque paroi (53 ou 54) du réacteur (paroi sensiblement verticale et sensiblement parallèle audit lit) à ladite paroi, et
— au moins une paroi étanche reliant le côté inférieur sensiblement horizontal de la face large du lit catalytique (52.2) le plus proche de chaque paroi (53 ou 54) du réacteur (paroi sensiblement verticale et sensiblement parallèle audit lit) à ladite paroi.

Ces quatre catégories de parois étanches sont par exemple fabriquées à partir de tôles minces, de préférence de tôles minces ondulées, la surface développée de chacune d'elles étant avantageusement comprise entre 1 et 500 fois, de préférence entre 2 et 50 fois la surface des parois (par exemple des tôles) verticales des lits catalytiques qu'elles relient.

Les distributeurs individuels (52.1) et les collecteurs individuels (52.3) ont avantageusement la même épaisseur $l_3$ et la même hauteur $l_1$ que les lits catalytiques (52.2).

Une forme de réalisation préférentielle du réacteur selon l'invention consiste en ce que la hauteur $l_1$, la largeur $l_2$ et l'épaisseur $l_3$ de chaque lit de catalyseur (52.2) obéissent aux conditions suivantes (1 mm = $10^{-3}$ m) :

- $l_1 > l_2 > l_3$ avec, de préférence, $l_1 \geq 2\, l_2$ ;
- 50 mm $\leq l_2 \leq$ 10000 mm, de préférence 100 mm $\leq l_2 \leq$ 5000 mm.
- 2 mm $\leq l_3 \leq$ 2000 mm, de préférence 5 mm $\leq l_3 \leq$ 500 mm.

Une largeur $l_2$ trop faible peut produire une maldistribution des réactifs entre les lits catalytiques, d'où un réformage non satisfaisant ; à l'inverse, une largeur $l_2$ trop élevée aurait tendance à faire augmenter la pression moyenne au sein du catalyseur et abaisserait le rendement de l'opération.

Afin d'avoir une meilleure conversion des essences lors de l'utilisation du réacteur selon l'invention, il peut être préférable que l'épaisseur $l_3$ de chaque lit catalytique (52.2) ($l_3$ correspondant également à l'écartement entre les canaux ou espaces internes creux (51) échangeurs de chaleur) soit telle que :

$$\frac{l_3}{2} \geq dp_m \geq \frac{l_3}{200},\ \text{de préférence}\ \frac{l_3}{5} \geq dp_m \geq \frac{l_3}{100},\ \text{où } dp_m \text{ correspond au diamètre hydraulique moyen d'un grain}$$

de catalyseur qui représente la taille moyenne d'un grain de catalyseur (dp = diamètre hydraulique d'un grain de catalyseur = $\frac{6V}{S}$, où V est son volume et S sa surface).

Lorsque les grains de catalyseur sont des sphères, $dp_m$ représente le diamètre moyen desdites sphères.

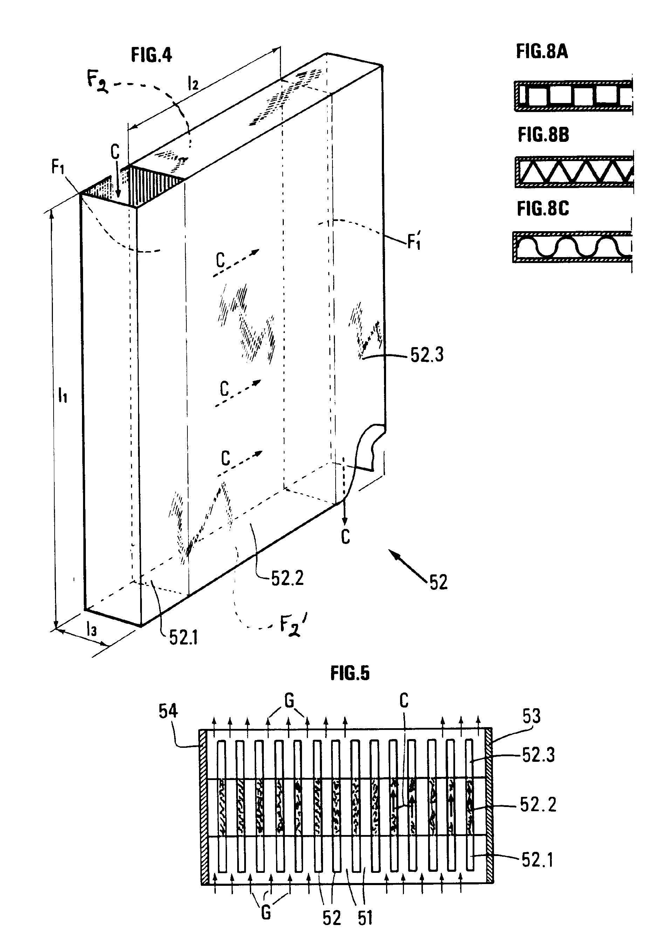

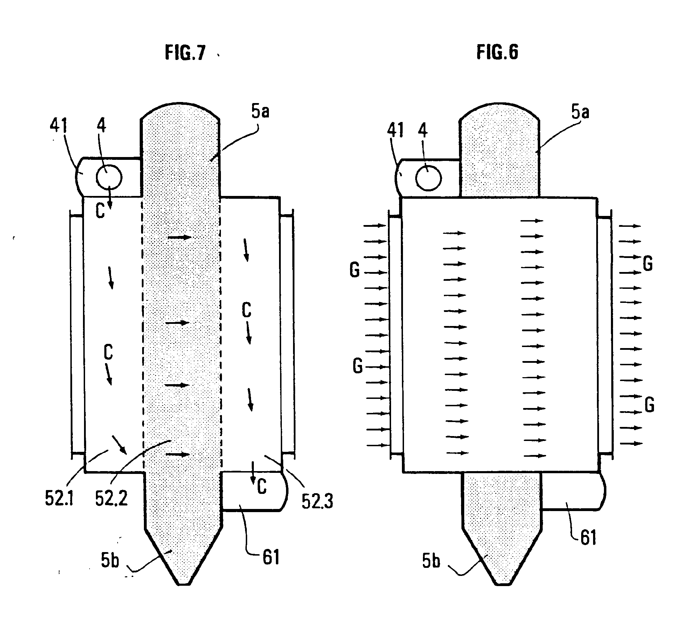

On peut aménager (voir figure 8), dans chaque canal ou espace interne creux (51) sensiblement parallélépipèdique situé entre deux cellules réactionnelles catalytiques élémentaires (52) voisines et dans chaque canal ou espace interne creux (51) sensiblement parallélépipèdique situé entre une paroi (53, 54) du réacteur et la cellule réactionnelle catalytique élémentaire (52) la plus proche de cette paroi et sensiblement parallèle à cette paroi, des conduits adjacents sensiblement horizontaux au moyen de tôles ondulées, les sections desdits conduits ayant au choix l'une des formes suivantes : carrée, rectangulaire (figure 8A), triangulaire (figure 8B), sinusoïdale (figure 8C) ou équivalente.

La présente invention concerne également un procédé de réformage catalytique dans lequel on fait circuler une charge d'hydrocarbures généralement liquide, dans des conditions de réformage, en présence d'hydrogène, à travers une zone de réaction (voir figures 3 à 7) dans laquelle la pression est comprise entre 0,05 et 2,0 MPa, de préférence entre 0,05 et 1,0 MPa, ladite zone renfermant :

— d'une part, au moins deux espaces réactionnels catalytiques élémentaires (52) non adjacents, sensiblement parallélépipèdiques, composés chacun d'une zone individuelle de distribution (52.1), sensiblement parallélépipèdique, d'une zone individuelle de collecte (52.3), sensiblement parallélépipèdique, et d'un lit de catalyseur (52.2), inséré entre les deux dites zones (52.1 et 52.2), sensiblement parallélépipèdique ;

— d'autre part, des espaces internes creux (51), sensiblement parallélépipèdiques.

Lesdits espaces réactionnels catalytiques élémentaires (52) et lesdits espaces internes creux (51) sont disposés sensiblement verticalement et sensiblement parallèlement entre eux, chaque espace réactionnel catalytique élémentaire (52) étant pris en sandwich entre au moins deux espaces internes creux (51) dans lesquels circulent sensiblement horizontalement les gaz de chauffe (définis précédemment) qui apportent la chaleur nécessaire à la réaction de réformage.

Dans ce procédé perfectionné :

— on envoie la charge d'hydrocarbures à l'intérieur d'une zone générale de distribution (41),

— on répartit ladite charge, en provenance de la zone générale de distribution (41), dans la zone individuelle de distribution (52.1) de chaque espace réactionnel catalytique élémentaire (52),

— on envoie ladite charge, à partir de chaque zone individuelle de distribution (52.1), dans chaque lit catalytique correspondant (52.2) qu'elle traverse sensiblement horizontalement, la charge et les gaz de chauffe circulant alors sensiblement parallèlement et à co-courants,

— on récupère la charge traitée, à la sortie de chaque lit catalytique (52.2), dans la zone individuelle de collecte (52.3) correspondante,

— on évacue la charge traitée de chaque zone individuelle de collecte (52.3) dans une zone générale de collecte (61) par laquelle on soutire ensuite ladite charge traitée.

De plus, dans chaque espace réactionnel catalytique élémentaire (52), la position de l'entrée de la charge dans la zone individuelle de distribution (52.1) est sensiblement diagonalement opposée, par rapport au centre du lit catalytique (52.2) correspondant, à la position de sortie de la charge traitée de la zone individuelle de collecte (52.3) correspondante.

Chaque lit catalytique (52.2) est préférentiellement de type mobile, les grains de catalyseur étant par exemple introduits en continu à la partie supérieure de chaque lit catalytique (52.2) et soutirés en continu à la partie inférieure de chaque lit catalytique (52.2) après avoir cheminé de haut en bas à l'intérieur de chaque lit (52.2).

Les grains de catalyseur peuvent alors être soutirés par l'extrêmité inférieure d'une zone évasée ayant la forme d'un cône ou d'une pyramide dont le sommet est tourné vers le bas, ladite zone étant reliée à la partie inférieure de chaque lit catalytique (52.2).

Il est avantageux que les gaz de chauffe circulent, à l'intérieur de chaque espace interne creux (51), dans des conduits adjacents (voir figures 8) sensiblement horizontaux à base de tôles ondulées, les sections desdits conduits ayant au choix l'une des formes suivantes : carrée, rectangulaire (figure 8A), triangulaire (figure 8B), sinusoïdale (figure 8C) ou équivalente. Ces conduites permettent en particulier d'assurer une circulation plus homogène des gaz de chauffe dans tous les espaces internes creux (51) et d'assurer constamment auxdits gaz une circulation très sensiblement parallèle à celle de la charge dans les lits catalytiques (52.2).

Une mise en oeuvre préférée des procédés selon l'invention consiste en ce que la hauteur $l_1$, la largeur $l_2$ et l'épaisseur $l_3$ de chaque lit de catalyseur (52.2) obéissent aux conditions suivantes (1 mm = $10^{-3}$ m) :

- $l_1 > l_2 > l_3$, avec, de préférence, $l_1 \geq l_2$ ;
- 50 mm $\leq l_2 \leq$ 10000 mm, de préférence 100 mm $\leq l_2 \leq$ 5000 mm.
- 2 mm $\leq l_3 \leq$ 2000 mm, de préférence 5 mm $\leq l_3 \leq$ 500 mm.

Afin d'augmenter l'efficacité des procédés selon l'invention, il peut être préférable que l'épaisseur $l_3$ de chaque lit catalytique (52.2) ($l_3$ correspondant également à l'écartement entre les canaux ou espaces internes creux (51) échangeurs de chaleur) soit telle que : $\frac{l_3}{2} \geq dp_m \geq \frac{l_3}{200}$, de préférence $\frac{l_3}{5} \geq dp_m \geq \frac{l_3}{100}$, où $dp_m$ correspond au diamètre hydraulique moyen d'un grain de catalyseur qui représente la taille moyenne d'un grain de catalyseur ($dp$ = diamètre hydraulique d'un grain de catalyseur = $\frac{6V}{S}$, où V est son volume et S sa surface).

L'invention est également relative à un procédé de réformage catalytique dans lequel on fait circuler une charge d'hydrocarbures généralement liquide, dans des conditions de réformage, en présence d'hydrogène, successivement à travers deux zones de réaction, dans au moins la première desquelles ledit procédé se déroule comme décrit précédemment.

Dans les différents procédés selon l'invention, le débit massique horaire de charge d'hydrocarbures à traiter est habituellement égal à 1 à 10 fois, de préférence 2 à 5 fois, la masse totale de catalyseur présent dans la ou les zones de réaction.

Les exemples suivants illustrent l'invention sans en limiter la portée :

## Exemple 1 (comparatif)

Dans une unité de réformage catalytique industrielle fonctionnant selon le modèle classique à 4 réacteurs adiabatiques à lits mobiles, on envoie une charge renfermant un mélange de naphta de pétrole brut d'une part et de naphta de craquage-cokéfaction thermique d'autre part.

La charge d'hydrocarbures ainsi formée a la composition suivante :

| | |
|---|---|
| Paraffines : | 55,3% |
| Naphtènes : | 38,7% |
| Aromatiques : | 6,0% |

Cette charge est mélangée avec du gaz de recyclage à 84% d'hydrogène de façon à former un mélange réactionnel dont le rapport molaire hydrogène sur naphta est égal à 4.

Le réactif ainsi obtenu est dirigé sur le système réactionnel contenant un catalyseur supporté par de l'alumine (de surface spécifique 220 m²/g et de volume poreux 0,57 cm³/g) et à base de platine, de chlore et de rhénium (en poids : 0,35% Pt ; 0,25% Re ; 1,12% Cl).

Le débit massique horaire de la charge de naphta est égal à environ 3,2 fois la masse de catalyseur présent dans le système réactionnel (dans l'ensemble des 4 réacteurs).

La pression à l'entrée du premier réacteur est maintenue à 1,2 MPa et on constate que la pression en sortie du dernier réacteur est égale à 0,93 MPa, soit une chute de 0,27 Mpa à travers le système réactionnel.

Les températures à l'entrée des 4 réacteurs sont ajustées à 502°C grâce au contrôle des fours de préchauffe et de réchauffage.

En sortie de chaque réacteur, on note les températures suivantes :

1er réacteur :     417°C
2ème réacteur :    436°C
3ème réacteur :    468°C
4ème réacteur :    492°C.

On obtient, en limite d'unité, un réformat à 98 NOR (nombre d'octane de recherche) avec les rendements suivants (% poids par rapport à la charge) :

●$H_2$ :              2,8%
●$C_{1-2}$ :          3,5%
●$C_{3-4}$ :          7,9%
●Réformat ($C_5$+) :  85,8%

## Exemple 2

Dans une unité pilote de réformage catalytique, dont le réacteur a été réalisé selon les figures 3 à 7 et 8A et dont les lits catalytiques (hauteur $l_1$, largeur $l_2$, épaisseur $l_3$) mobiles sont tels que $l_1$ = 2500 mm, $l_2$ = 800 mm, $l_3$ = 90 mm et $l_3/dp_m$ = 15, on utilise le même catalyseur que précédemment et on injecte la même charge (naphta) qu'à l'exemple 1, mélangée avec de l'hydrogène dans un rapport molaire de 4.

La charge entre dans le réacteur (figure 1) à 450°C (soit une température inférieure de 52°C à la température d'entrée du premier exemple) et on règle sa température grâce à un débit de fumées dont la température d'entrée est maintenue à la valeur de 610°C en mélangeant des fumées de four avec des fumées de sortie de réacteur se trouvant à 510°C (la charge et les fumées entrent du même côté du réacteur).

Le taux de recyclage des fumées (en rapport pondéral) est de 6,5 environ et l'excès d'air utilisé est d'environ 100%.

En sortie, on condense le réformat obtenu, on recycle l'hydrogène nécessaire au mélange à l'entrée et on règle la purge des gaz fabriqués de façon à obtenir une pression de sortie égale à 0,53 MPa.

Le débit massique horaire de charge est réglé de façon à obtenir un réformat de 98 NOR.

A ce moment, on note que :

— le rapport entre le débit massique horaire injecté et la masse du catalyseur contenu dans le réacteur est égal à 3,3 au lieu de 3,2 lors de la marche en adiabatique (exemple 1) ;

— la pression à l'entrée du réacteur est égale à 0,55 MPa contre 0,93 à 1,2 MPa à l'entrée des réacteurs adiabatiques (exemple 1) ;

— la température des réactifs, bien qu'égale à 495°C à la sortie, connaît cependant un minimum à 420°C au sein du réacteur ;

— les rendements s'établissent de la manière suivante (% poids par rapport à la charge) :

●$H_2$ :              3,1%
●$C_{1-2}$ :          2,6%
●$C_{3-4}$ :          5,8%
●Réformat ($C_5$+) :  88,5%

En dépit d'une température d'entrée (450°C) très inférieure à la température d'entrée (502°C) dans le premier exemple, grâce à la marche basse pression que permet ce système réactionnel isotherme, on a gagné 2,7 points sur le rendement en réformat et 0,3 point sur celui en hydrogène.

Si on remplace les lits mobiles par des lits fixes (les autres équipements et les conditions opératoires restant les mêmes), on obtient les rendements suivants (% poids par rapport à la charge) :

●$H_2$ :              3,1%
●$C_{1-2}$ :          2,7%
●$C_{3-4}$ :          6,0%
●Réformat ($C_5$+) :  88,2%.

### Exemple 3 (comparatif)

On reprend l'essai précédent (exemple 2, en lits mobiles), mais on inverse le courant des réactifs en les faisant entrer du côté où sortent les fumées formant le fluide caloporteur.

Pour conserver le même nombre d'octane au réformat, il faut constamment relever la température d'entrée des fumées ainsi que celle de sortie des réactifs.

Au bout de 72 heures, l'essai est arrêté, la température de sortie des réactifs se trouvant alors à 510°C.

### Exemple 4 (comparatif)

On utilise le même réacteur qu'à l'exemple 2, l'épaisseur des lits catalytiques (qui sont mobiles) étant telle que $l_3/dp_m = 1,5$ (les autres équipements et les conditions opératoires restant identiques).

Grâce à un rapport surface d'échange/volume catalytique beaucoup plus élevé, on a pu baisser la température des fumées ainsi que celles des réactifs en sortie de réacteur.

Mais on a constaté une augmentation du rendement en hydrocarbures légers et une diminution concommittante de la production d'hydrogène, le rendement en réformat ayant perdu 1,5 points par rapport à l'exemple 2.

### Exemple 5

On dispose de deux réacteurs à lits mobiles dans lesquels on répartit le catalyseur (identique à celui de l'exemple 1) dans un rapport 50/50.

Le premier réacteur est identique à celui de l'exemple 2 (avec circulation d'un fluide caloporteur à base de fumées), et le second est adiabatique (sans caloporteur).

Les mêmes conditions opératoires que celles de l'exemple 2 étant respectées, on note que :
— le débit massique horaire de la charge est égal à 3,4 fois la masse de catalyseur contenue dans l'ensemble du système réactionnel (c'est-à-dire les deux réacteurs) ;
— la pression d'entrée dans le premier réacteur est remontée à 0,58 MPa au lieu de 0,55 MPa dans la marche à un seul réacteur (exemple 2), la pression de sortie du deuxième réacteur étant de 0,54 MPa ;
— dans le premier réacteur, la température d'entrée a dû être relevée à 503°C et dans le second réacteur les produits sortent à 493°C ;
— les rendements mesurés (en % poids par rapport à la charge) n'ont pas varié sensiblement par rapport à ceux de l'exemple 2 (lits mobiles) :

- $H_2$ :               3,2%
- $C_{1-2}$ :           2,5%
- $C_{3-4}$ :           5,6%
- Réformat ($C_5+$) :   88,7%

### Exemple 6

On dispose de deux réacteurs isothermes selon l'invention disposés en série (figure 2), munis de lits mobiles (avec un catalyseur identique à celui des exemples précédents et réparti dans un rapport 50/50 dans chacun des réacteurs).

On opère dans les mêmes conditions opératoires que dans l'exemple 2. Cependant :
— dans le premier réacteur, les fumées ont les mêmes températures que dans l'exemple 2, c'est-à-dire 610°C (entrée) et 510°C (sortie) ; mais l'excès d'air utilisé n'est plus que de 10% environ et, pour arriver à 610°C à l'entrée, il a fallu porter le taux de recyclage des fumées d'environ 6,5 à 14 environ (rapport pondéral) ;
— dans le second réacteur, les fumées pénètrent à 560°C et sortent à 510°C ; le même excès d'air est utilisé, mais le taux de recyclage des fumées a été porté à 29,5 environ ;
— dans le premier réacteur, la température d'entrée des réactifs est de 450°C, température qui est ensuite réglée et maintenue à 485°C par le débit de fumées (la température de sortie du premier réacteur est donc alors de 485°C) ;
— dans le second réacteur, la température d'entrée des réactifs est de 485°C, température qui est ensuite réglée et maintenue à 495°C par le débit de fumées ; la température de sortie du second réacteur est donc alors de 495°C.

Avec ces dispositions, on a pu monter le débit massique horaire traité à 3,8 fois la masse de catalyseur contenu dans l'ensemble du système réactionnel.

Enfin, les rendements (en poids par rapport à la charge) sont les suivants :

- $H_2$ : 3,4%
- $C_{1-2}$ : 2,4%
- $C_{3-4}$ : 5,3%
- Réformat ($C_5$+) : 88,9%

**Revendications**

1. Réacteur comportant au moins un moyen d'introduction d'une charge, au moins un moyen d'évacuation de la charge traitée, au moins un moyen d'introduction de solide pulvérulent à la partie supérieure dudit réacteur, au moins un moyen d'évacuation dudit solide à la partie inférieure dudit réacteur, ledit réacteur étant caractérisé en ce qu'il comporte en outre :

— au moins deux cellules réactionnelles élémentaires non adjacentes entre elles et non adjacentes aux parois dudit réacteur, sensiblement verticales et parallélépipèdiques, sensiblement parallèles entre elles, chaque canal sensiblement parallélépipèdique situé entre deux dites cellules voisines et chaque canal sensiblement parallélépipèdique situé entre une paroi du réacteur et la cellule élémentaire la plus proche de cette paroi et sensiblement parallèle à cette paroi étant destinés à la circulation de gaz de chauffe, chacune desdites cellules étant composée des trois enceintes sensiblement parallélépipèdiques suivantes :

- un distributeur individuel de la charge,
- un collecteur individuel de la charge traitée,
- un lit de solide pulvérulent inséré entre ledit distributeur individuel et ledit collecteur individuel, ledit lit étant ouvert, sur toute une face mince sensiblement verticale $F_1$, sur ledit distributeur individuel et ouvert, sur toute la face mince $F_1'$ sensiblement parallèle à $F_1$, sur ledit collecteur individuel, lesdites faces mince $F_1$ et $F_1'$ étant chacune définie par une paroi permable aux fluides et imperméables aux particules solides, ledit lit communicant, par sa face mince supérieure sensiblement horizontale $F_2$, avec ledit moyen d'introduction du solide et, par sa face mince inférieure sensiblement horizontale $F_2'$ et sensiblement parallèle à $F_2$, avec ledit moyen d'évacuation du solide, ledit lit étant tel que chacune de ses deux faces larges sensiblement verticales est fermée par une paroi étanche dont les prolongements au-delà dudit lit forment des parois étanches dudit distributeur individuel et dudit collecteur individuel,

— au moins une paroi étanche reliant entre eux les côtés supérieurs sensiblement horizontaux des faces larges en regard de deux lits de solide voisins,

— au moins une paroi étanche reliant entre eux les côtés inférieurs sensiblement horizontaux desdites faces larges en regard de deux lits de solide voisins,

— au moins une paroi étanche reliant le côté supérieur sensiblement horizontal de la face large du lit de solide le plus proche de chaque paroi dudit réacteur et sensiblement parallèle à cette paroi à ladite paroi,

— au moins une paroi étanche reliant le côté inférieur sensiblement horizontal de la face large du lit de solide le plus proche de chaque paroi dudit réacteur et sensiblement parallèle à cette paroi à ladite paroi,

— au moins un distributeur général de la charge, relié au(x)dit(s) moyen(s) d'introduction de la charge et à tous les distributeurs individuels de la charge par une de leurs faces minces sensiblement horizontales,

— au moins un collecteur général de la charge traitée, relié au(x)dit(s) moyen(s) d'évacuation de la charge traitée et à tous les collecteurs individuels de la charge traitée par une de leurs faces minces sensiblement horizontales qui est sensiblement diagonalement opposée, par rapport au centre du lit de solide correspondant, à la face mince sensiblement horizontale du distributeur individuel correspondant par laquelle celui-ci est relié au distributeur général.

2. Réacteur selon la revendication 1 dans lequel la hauteur $l_1$, la largeur $l_2$ et l'épaisseur $l_3$ de chaque lit de solide pulvérulent sont telles que :

$$l_1 > l_2 > l_3, \ 2 \text{ mm} \leq l_3 \leq 2000 \text{ mm et } 50 \text{ mm} \leq l_2 \leq 10.000 \text{ mm.}$$

3. Réacteur selon la revendication 2 dans lequel :

$$l_1 \geq 2l_2, \ 5 \text{ mm} \leq l_3 \leq 500 \text{ mm et } 100 \text{ mm} \leq l_2 \leq 5000 \text{ mm.}$$

4. Réacteur selon l'une des revendications 1 à 3 dans lequel on aménage, dans chaque canal sensiblement

**10**

parallélépipèdique situé entre deux cellules réactionnelles élémentaires voisines et dans chaque canal sensiblement parallélépipèdique situé entre une paroi du réacteur et la cellule élémentaire la plus proche de cette paroi et sensiblement parallèle à cette paroi, des conduits adjacents sensiblement horizontaux au moyen de tôles ondulées, les sections desdits conduits ayant au choix l'une des formes suivantes : carrée, rectangulaire, triangulaire et sinusoïdale.

5. Réacteur selon l'une des revendications 1 à 4 dans lequel l'épaisseur $l_3$ de chaque lit de solide est telle que :

$$\frac{l_3}{2} \geq dp_m \geq \frac{l_3}{200},$$

où $dp_m$ représente le diamètre hydraulique moyen d'un grain de solide pulvérulent.

6. Procédé de réformage catalytique dans lequel on fait circuler une charge d'hydrocarbures, dans des conditions de réformage, en présence d'hydrogène, à travers une zone de réaction dans laquelle la pression est comprise entre 0,05 et 2,0 MPa, ladite zone renfermant, d'une part, au moins deux espaces réactionnels catalytiques élémentaires non adjacents, sensiblement parallélépipèdiques, composés chacun d'une zone individuelle de distribution, sensiblement parallélépipèdique, d'une zone individuelle de collecte, sensiblement parallélépipèdique et d'un lit de catalyseur inséré entre les deux dites zones, sensiblement parallélépipèdique, et, d'autre part, des espaces internes creux, sensiblement parallélépipèdiques, lesdits espaces réactionnels catalytiques élémentaires et lesdits espaces internes creux étant disposés sensiblement verticalement et sensiblement parallèlement entre eux, chaque espace réactionnel catalytique élémentaire étant pris en sandwich entre au moins deux espaces internes creux dans lesquels circulent sensiblement horizontalement des gaz de chauffe, qui apportent la chaleur nécessaire à la réaction de réformage, procédé dans lequel en outre :

— on envoie la charge d'hydrocarbures à l'intérieur d'une zone générale de distribution,

— on répartit ladite charge, en provenance de la zone générale de distribution, dans la zone individuelle de distribution de chaque espace réactionnel catalytique élémentaire,

— on envoie ladite charge, à partir de chaque zone individuelle de distribution, dans chaque lit catalytique correspondant qu'elle traverse sensiblement horizontalement, la charge et les gaz de chauffe circulant alors à co-courants,

— on récupère la charge traitée, à la sortie de chaque lit catalytique, dans la zone individuelle de collecte correspondante,

— on évacue la charge traitée de chaque zone individuelle de collecte dans une zone générale de collecte par laquelle on soutire ensuite ladite charge traitée, procédé dans lequel également, dans chaque espace réactionnel catalytique élémentaire, la position de l'entrée de la charge dans la zone individuelle de distribution est sensiblement diagonalement opposée, par rapport au centre du lit catalytique correspondant à la position de sortie de la charge traitée de la zone individuelle de collecte correspondante.

7. Procédé selon la revendication 6 dans lequel chaque lit catalytique est de type mobile, les grains de catalyseur étant introduits en continu à la partie supérieure de chaque lit catalytique et soutirés en continu progressivement à la partie inférieure de chaque lit catalytique après avoir cheminé de haut en bas à l'intérieur de chaque lit.

8. Procédé selon l'une des revendications 6 et 7 dans lequel les gaz de chauffe sont à base de fumées provenant d'une combustion à l'air d'un mélange d'hydrocarbures.

9. Procédé selon la revendication 8 dans lequel :

(a) de l'air est préchauffé entre 60 et 300°C par contact indirect avec une première partie d'un gaz de chauffe défini plus loin, puis traverse une zone de brûlage où il sert de comburant à un mélange d'hydrocarbures dans une zone de chauffage, provoquant la formation d'un gaz de chauffe ou gaz de fumées dont la température est comprise entre 400 et 900°C, à l'aide d'une deuxième partie d'un gaz de chauffe défini plus loin,

(b) ledit gaz de chauffe ainsi créé sert au chauffage de la zone de réformage catalytique définie à la revendication 6,

(c) le gaz de chauffe soutiré de la zone de réformage est d'une part au moins en partie utilisé pour préchauffer ledit air employé dans (a) et est, d'autre part, recyclé au moins en partie pour transformer ledit mélange d'hydrocarbures en gaz de chauffe dans ladite zone de chauffage définie en (b), le taux de recyclage du gaz de chauffe (rapport pondéral entre le gaz de chauffe recyclé et le gaz de chauffe utilisé pour préchauffer ledit air employé en (a)) représentant environ 0,5 à 200 parties en poids.

10. Procédé selon l'une des revendications 6 à 9 dans lequel les gaz de chauffe circulent, à l'intérieur de chaque espace interne creux, dans des conduits adjacents sensiblement horizontaux à base de tôles ondulées, les sections desdits conduits ayant au choix l'une des formes suivantes : carrée, rectangulaire, triangulaire,

11

sinusoïdale.

11. Procédé selon l'une des revendications 6 à 10 dans lequel l'épaisseur 13 de chaque lit catalytique est telle que :

$$\frac{l_3}{2} \geq dp_m \geq \frac{l_3}{200},$$

où $dp_m$ représente le diamètre hydraulique moyen d'un grain de catalyseur.

12. Procédé selon l'une des revendications 6 à 11 dans lequel la pression dans la zone de réaction est comprise entre 0,05 et 1,0 MPa.

13. Procédé de réformage catalytique dans lequel on fait circuler une charge d'hydrocarbures, dans des conditions de réformage, en présence d'hydrogène, successivement à travers deux zones de réaction, dans au moins la première desquelles ledit procédé se déroule suivant l'une des revendications 6 à 12.

14. Procédé de réformage catalytique dans lequel on fait circuler une charge d'hydrocarbures, dans des conditions de réformage, en présence d'hydrogène, successivement à travers deux zones de réaction, dans chacune desquelles ledit procédé se déroule suivant l'une des revendications 6 à 13.


**Patentansprüche**

1. Reaktor mit wenigstens einem Mittel zum Einführen einer Charge, wenigstens einem Mittel zum Abziehen der behandelten Charge, wenigstens einem Mittel zum Einführen pulverförmigen Feststoffs am oberen Teil dieses Reaktors, wenigstens einem Mittel zum Abziehen dieses Feststoffs am unteren Teil dieses Reaktors, wobei der Reaktor sich dadurch auszeichnet, daß er darüberhinaus umfaßt :

— wenigstens zwei elementare Reaktionszellen, die einander nicht benachbart und den Wandungen dieses Reaktors nicht benachbart sind, welche im wesentlichen vertikal und parallelepipedförmig und im wesentlichen parallel zueinander sind, wobei jeder im wesentlichen parallelepipedförmige, zwischen zwei dieser benachbarten Zellen angeordnete Kanal und jeder im wesentlichen parallelepipedförmige zwischen einer Wandung des Reaktors und der dieser Wandung am nächsten kommenden Elementarzelle angeordnete Kanal und der im wesentlichen parallel zu dieser Wandung verläuft zur Heizgaszirkulation bestimmt sind, wobei jede dieser Zellen aus den drei im wesentlichen parallelepipedförmigen folgenden Kammern zusammengeaetzt ist :

• einem individuellen Verteiler der Charge,

• einem individuellen Sammler der behandelten Charge,

• einem pulverförmigen Feststoffbett, das zwischen diesem individuellen Verteiler und diesem individuellen Sammler eingesetzt ist, wobei dieses Bett über eine dünne, im wesentlichen vertikale Fläche $F_1$ gegen diesen individuellen Verteiler offen ist und über die gesamte schmale im wesentlichen zu $F_1$ parallele Fläche $F_1'$ gegen diesen individuellen Sammler offen ist, wobei diese schmalen Flächen $F_1$ und $F_1'$ je definiert sind durch eine für Fluide permeable Wandung und eine für Feststoffpartikel impermeable Wandung und dieses Bett mit seiner dünnen, im wesentlichen horizontalen Oberseite $F_2$ mit diesem Mittel zum Einführen des Feststoffs in Verbindung steht und mit seiner schmalen unteren im wesentlichen horizontalen Fläche $F_2'$, die im wesentlichen parallel zu $F_2$ ist, mit diesem Mittel zum Abziehen des Feststoffs in Verbindung steht, wobei dieses Bett derart ist, daß jede seiner breiten im wesentlichen vertikalen Flächen durch eine dichte Wandung geschlossen ist, deren Verlängerungen über dieses Bett hinaus dichte Wandungen dieses individuellen Verteilers und dieses individuellen Sammlers bilden,

— wenigstens eine dichte Wandung, die die oberen im wesentlichen horizontalen Seiten der breiten einander gegenüberstehenden Flächen von zwei benachbarten Feststoffbetten miteinander verbindet,

— wenigstens eine dichte Wandung, die miteinander die unteren im wesentlichen horizontalen Seiten dieser breiten gegenüberstehenden Flächen von zwei benachbarten Feststoffbetten verbindet,

— wenigstens eine dichte Wandung, die die obere im wesentlichen horizontale Seite der breiten Fläche des Feststoffbettes, die jeder Wandung dieses Reaktors am weitesten benachbart ist, und im wesentlichen parallel zu dieser Wandung mit dieser Wandung ist, verbindet,

— wenigstens eine dichte Wandung, welche die untere im wesentlichen horizontale Seite der breiten Fläche dieses Feststoffbettes, die jeder Wandung dieses Reaktors am weitesten benachbart ist und im wesentlichen parallel zu dieser Wandung ist, mit dieser Wandung verbindet,

— wenigstens einen allgemeinen Verteiler für die Charge, der mit diesem (diesen) Mittel(n) zum Einführen der Charge und mit sämtlichen individuellen Verteilern für die Charge über eine ihrer schmalen im wesentlichen horizontalen Flächen verbunden ist,

**12**

— wenigstens einen allgemeinen Sammler für die behandelte Charge, der bzw. die mit diesem bzw. diesen Abzugsmittel(n) für die behandelte Charge und mit sämtlichen individuellen Sammlern der behandelten Charge über eine ihrer im wesentlichen horizontalen schmalen Flächen, die im wesentlichen diagonal bezogen auf die Mitte des entsprechenden Feststoffbettes, gegenüberliegt, mit der schmalen im wesentlichen horizontalen Fläche des individuellen entsprechenden Verteilers verbunden ist, über welche diese mit dem allgemeinen Verteiler verbunden ist.

2. Reaktor nach Anspruch 1, bei dem die Höhe $l_1$, die Breite $l_2$ und die Dicke $l_3$ jedes pulverförmigen Feststoffbettes derart sind, daß

$$l_1 > l_2 > l_3, \ 2 \text{ mm } l_3 \leq 2.000 \text{ mm et } 50 \text{ mm} \leq l_2 \leq 10.000 \text{ mm}.$$

ist.

3. Reaktor nach Anspruch 2, bei dem

$$l_1 \geq 2l_2, \ 5 \text{ mm} \leq<< l_3 \leq 500 \text{ mm et } 100 \text{ mm} \leq l_2 \leq 5.000 \text{ mm}.$$

ist.

4. Reaktor nach einem der Ansprüche 1 bis 3, bei dem man in jedem im wesentlichen parallelepipedförmigen zwischen zwei elementaren benachbarten Reaktionszellen angeordneten Kanal und in jedem im wesentlichen parallelepipedförmigen zwischen einer Wandung des Reaktors und der dieser Wandung am weitesten benachbarten Elementarzelle, die im wesentlichen parallel zu dieser Wandung ist, benachbarte im wesentlichen horizontale Leitungen vermittels Wellblechen anordnet, wobei die Querschnitte dieser Leitungen nach Wunsch eine der folgenden Formen haben :
quadratisch, rechtwinkelig, dreieckig und sinusförmig.

5. Reaktor nach einem der Ansprüche 1 bis 4, bei dem die Dicke $l_3$ jedes Feststoffbettes derart ist, daß :

$$\frac{l_3}{2} \geq dp_m \geq \frac{l_3}{200},$$

wo $dp_m$ den hydraulischen mittleren Durchmesser eines pulverförmigen Feststoffkorns darstellt.

6. Verfahren zum katalytischen Reformieren, bei dem man eine Kohlenwasserstoffcharge unter Reformierungsbedingungen in Anwesenheit von Wasserstoff durch eine Reaktionszone strömen läßt, in welcher der Druck zwischen 0,05 und 2,0 MPa liegt, wobei diese Zone einerseits wenigstens zwei katalytische nicht benachbarte elementare Reaktionsräume, die im wesentlichen parallelepipedförmig sind, enthält und die je aus einer individuellen Verteilerzone, die im wesentlichen parallelepipedförmig ist, einer individuellen Sammlerzone, die im wesentlichen parallelepipedförmig ist und einem Katalysatorbett zusammengesetzt sind, das zwischen diesen beiden im wesentlichen parallelepipedförmigen Zonen eingefügt ist und andererseits hohle Innenräume enthält, die im wesentlichen parallelepipedförmig sind, wobei diese katalytischen elementaren Reaktionsräume und diese hohlen Innenräume im wesentlichen vertikal und im wesentlichen parallel zueinander angeordnet sind, wobei jeder katalytische elementare Reaktionsraum sandwichartig zwischen wenigstens zwei hohlen Innenräumen gefaßt ist, in welchen im wesentlichen horizontal Heizgase zirkulieren, welche die zur Reformierungsreaktion notwendige Wärme zuführen, wobei nach diesem Verfahren im übrigen
— man die Kohlenwasserstoffcharge in das Innere einer allgemeinen Verteilerzone leitet,
— man diese Charge, die aus der allgemeinen Verteilerzone stammt, in die individuelle Verteilerzone jedes katalytischen elementaren Reaktionsraums verteilt,
— man diese Charge ausgehend von jeder individuellen Verteilerzone in jedes entsprechende katalytische Bett leitet, die sie im wesentlichen horizontal durchsetzt, wobei die Charge und die Heizgase dann im Gleichstrom strömen,
— man die behandelte Charge am Austritt aus jedem katalytischen Bett in der individuellen entsprechenden Sammlerzone gewinnt, und
— die behandelte Charge aus jeder individuellen Sammlerzone in eine allgemeine Sammlerzone abzieht, aus der man dann diese behandelte Charge absaugt, Verfahren, bei dem auch in jedem elementaren Reaktionsraum die Position des Eintritts der Charge in die individuelle Verteilerzone im wesentlichen diagonal gegenüberliegend, bezogen auf die Mitte des entsprechenden katalytischen Bettes zu der Lage des Austritts der behandelten Charge aus der entsprechenden individuellen Sammlerzone ist.

7. Verfahren nach Anspruch 6, bei dem jedes katalytische Bett vom beweglichen Typ ist, wobei die Katalysatorkörner kontinuierlich am oberen Teil jedes katalytischen Bettes eingeführt werden und kontinuierlich progressiv am unteren Teil jedes katalytischen Bettes abgezogen werden, nachdem sie von oben nach unten im Inneren jedes Bettes gewandert sind.

8. Verfahren nach einem der Ansprüche 6 und 7, bei dem die Heizgase auf Rauchgasen basieren, die aus einer Verbrennung eines Kohlenwasserstoffgemisches mittels Luft stammen.

9. Verfahren nach Anspruch 8, bei dem :

(a) Luft zwischen 60 und 300°C durch indirekten Kontakt mit einem ersten Teil eines weiter unten definierten Heizgases vorgewärmt wird, dann eine Brennzone durchsetzt, wo sie als die Verbrennung bewirkendes Mittel für ein Kohlenwasserstoffgemisch in einer Heizzone dient und die Bildung eines Heizgases oder von Rauchgasen bewirkt, deren Temperatur zwischen 400 und 900°C liegt, und zwar mit Hilfe eines zweiten Teils eines weiter unten definierten Heizgases,

(b) dieses so erzeugte Heizgas der Erhitzung der katalytischen in Anspruch 6 definierten Reformierungszone dient, und

(c) das aus der Reformierungszone abgezogene Heizgas einerseits wenigstens zum Teil verwendet wird, um diese in (a) verwendete Luft vorzuwärmen und andererseits wenigstens zum Teil recyclisiert wird, um dieses Kohlenwasserstoffgemisch in Heizgas in dieser in (b) definierten Zone umzuformen, wobei der Recyclisierungsgrad des Heizgases (Gewichtsanteil zwischen dem recyclisierten Heizgas und dem Heizgas, das verwendet wird, um diese bei (a) verwendete Luft vorzuwärmen) etwa 0,5 bis 200 Gewichtsteile ausmacht.

10. Verfahren nach einem der Ansprüche 6 bis 9, bei dem die Heizgase im Inneren jedes Innenhohlraumes in benachbarten im wesentlichen horizontalen Leitungen auf der Basis von Wellblechen zirkulieren, wobei die Querschnitte dieser Leitungen wahlweise eine der folgenden Formen haben : quadratisch, rechtwinkelig, dreieckig und sinusförmig.

11. Verfahren nach einem der Ansprüche 6 bis 10, bei dem die Dicke $l_3$ jedes katalytischen Bettes derart ist, daß :

$$\frac{l_3}{2} \geq dp_m \geq \frac{l_3}{200},$$

wo $dp_m$ den hydraulischen mittleren Durchmesser eines Katalysatorkorns darstellt.

12. Verfahren nach einem der Ansprüche 6 bis 11, bei dem der Druck in der Reaktionszone zwischen 0,05 und 1,0 MPa beträgt.

13. Verfahren zum katalytischen Reformieren, bei dem man eine Kohlenwasserstoffcharge unter Reformierungsbedingungen in Anwesenheit von Wasserstoff nacheinander durch zwei Reaktionszonen strömen läßt, wobei wenigstens in deren erster dieses Verfahren gemäß einem der Ansprüche 6 bis 12 abläuft.

14. Katalytisches Reformierungsverfahren, bei dem man eine Kohlenwasserstoffcharge unter Reformierungsbedingungen in Anwesenheit von Wasserstoff nacheinander durch zwei Reaktionszonen strömen läßt, in deren jeder dieses Verfahren gemäß einem der Ansprüche 6 bis 13 abläuft.

## Claims

1. Reactor comprising at least one means for introducing a charge, at least one means for removing the processed charge, at least one means for introducing a powdery solid in the upper part of said reactor, at least one means for removing said solid from the lower part of said reactor, said reactor further comprising :

— at least two elementary reaction cells not adjacent each other and not adjacent to the walls of said reactor, substantially vertical and parallelepipedic and substantially parallel to each other, each substantially parallelepipedic channel situated between two said cells next to each other and each substantially parallelepipedic channel situated between a wall of the reactor and the elementary cell the closest to this wall and substantially parallel to this wall being intended for the heating gas flow, each of said cells being formed of the three following substantially parallelepipedic enclosures :

● an individual charge distributor,

● an individual processed charge collector,

● a powdery solid bed inserted between said individual distributor and said individual collector, said bed being open, over the whole of a substantially vertical thin face $F_1$, on said individual distributor and open, over the whole of the thin face $F_1'$ substantially parallel to $F_1$, on said individual collector, said thin faces $F_1$, and $F_1'$ each being defined by a wall permeable to fluids an impermeable to solid particles, said bed communicating, by its upper substantially horizontal thin face $F_2$, with said solid introduction means and, by its thin substantially horizontal lower face $F_2'$ and substantially parallel to $F_2$, with said solid removal means, said bed being such that each of its two substantially vertical wide faces is closed by a sealed wall whose extensions beyond said bed form sealed walls of said individual distributor and said individual collector,

— at least one sealed wall connecting together the substantially horizontal upper sides of the opposite wide faces of two solid beds next to each other,

— at least one sealed wall connecting together the substantially horizontal lower sides of said opposite wide faces of two solid beds next to each other,

— at least one sealed wall connecting the substantially horizontal upper side of the wide face of the solid bed the closest to each wall of said reactor and substantially parallel to this wall, to said wall,

— at least one sealed wall connecting the substantially horizontal lower side of the wide face of the solid bed the closest to each wall of said reactor and substantially parallel to this wall, to said wall,

— at least one general charge distributor, connected to said means for introducing the charge and to all the individual distributors of the charge by one of their substantially horizontal thin faces,

— at least one general processed charge collector, connected to said processed charge removal means and to all the individual collectors of the processed charge by one of their substantially horizontal thin faces which is substantially diagonally opposite, with respect to the center of the corresponding solid bed, to the substantially horizontal thin face of the corresponding individual distributor by which the latter is connected to the general distributor.

2. Reactor according to claim 1, wherein the height $l_1$, the width $l_2$ and the thickness $l_3$ of each powdery solid bed are such that :

$$l_1 > l_2 > l_3, 2 \text{ mm}, \leq l_3 \leq 2000 \text{ mm and } 50 \text{ mm} \geq l_2 \leq 10000 \text{ mm}.$$

3. Reactor according to claim 2, wherein :

$$l_1 \geq 2l_2, 5 \text{ mm} \leq l_3 \leq 500 \text{ mm and } 100 \text{ mm} \leq l_2 \leq 5000 \text{ mm}.$$

4. Reactor according to one of claims 1 to 3, wherein, in each substantially parallelepipedic channel situated between two elementary reaction cells next to each other and in each substantially parallelepipedic channel situated between a wall of the reactor and the elementary cell the closest to this wall and substantially parallel to this wall, substantially horizontal adjacent ducts are provided by means of corrugated metal sheets, the sections of said ducts having one of the following forms : square, rectangular, triangular and sinusoidal.

5. Reactor according to one of claims 1 to 4, wherein the thickness $l_3$ of each solid bed is such that :

$$\frac{l_3}{2} \geq dp_m \geq \frac{l_3}{200}$$

where $dp_m$ represents the mean hydraulic diameter of a grain of powdery solid.

6. Catalytic reforming process in which a hydrocarbon charge is caused to flow, under reforming conditions, in the presence of hydrogen, through a reaction zone in which the pressure is ranging from 0.05 to 2.0 MPa, said zone containing,on the one hand, at least two non adjacent elementary catalytic reaction spaces, which are substantially parallelepipedic and each formed of a substantially parallelepipedic individual distribution zone, a substantially parallelepipedic individual collecting zone and a catalytic bed inserted between said two zones and which is substantially parallelepipedic and, on the other hand, substantially parallelepipedic hollow internal spaces, said elementary catalytic reaction spaces and said hollow internal spaces being disposed substantially vertically and substantially parallel to each other, each elementary catalytic reaction space being sandwiched between at least two hollow internal spaces in which flow, substantially horizontally, heating gases which bring the heat required for the reforming reaction, in which process in addition :

— the hydrocarbon charge is fed into a general distribution zone,

— said charge coming from the general distribution zone is distributed in the individual distribution zone of each elementary catalytic reaction space,

— said charge from each individual distribution zone is fed to each corresponding catalytic bed through which it passes substantially horizontally, the charge and the heating gases then flowing co-currentwise,

— the processed charge is recovered, at the output of each catalytic bed, in the corresponding individual collecting zone,

— the processed charge is removed from each individual collecting zone into a general collecting zone from which said processed charge is then drawn off, in which process also, in each elementary catalytic reaction space, the position of the input of the charge into the individual distribution zone is substantially diagonally opposite, with respect to the center of the corresponding catalytic bed, to the output position of the processed charge from the corresponding individual collecting zone.

7. Process according to claim 6, wherein each catalytic bed is of mobile type, the grains of catalyst being fed continuously into the upper part of each catalytic bed and drawn off continuously progressively from the lower part of each catalytic bed after passing from top to bottom inside each bed.

8. Process according to one of claims 6 and 7, wherein the heating gases comprise smokes coming from combustion in air of a hydrocarbon mixture.

9. Process according to claim 8, wherein :

(a) air is pre-heated between 60 and 300°C by indirect contact with a first part of a heating gas defined further on, then passes through a burning zone where it serves as combustive for a hydrocarbon mixture in a heating zone, causing the formation of a heating gas or smoke gas whose temperature is between 400 and 900°C, by means of a second part of a heating gas defined further on,

(b) said heating gas thus created serves for heating the catalytic reforming zone defined in claim 6,

(c) the heating gas drawn off from the reforming zone is on the one hand at least partially used for pre-heating said air used in (a) and is on the other hand recycled at least partially for transforming said hydrocarbon mixture into heating gas in said heating zone defined in (b), the rate of recycling the heating gas (weight ratio between the recycled heating gas and the heating gas used for preheating said air used in (a)) representing about 0.5 to 200 part by weight.

10. Process according to one of claims 6 to 9, wherein the heating gases flow, inside each hollow internal space, in substantially horizontal adjacent ducts formed of corrugated metal sheets, the sections of said ducts having one of the following forms : square, rectangular, triangular, sinusoidal.

11. Process according to one of claims 6 to 10, wherein the thickness 13 of each catalytic bed is such that:

$$\frac{l_3}{2} \geq dp_m \geq \frac{l_3}{200}$$

where $dp_m$ represents the mean hydraulic diameter of a catalyst grain.

12. Process according to one of claims 6 to 11, wherein the pressure in the reaction zone is ranging from 0.05 to 1.0 MPa.

13. Catalytic reforming process wherein a hydrocarbon charge is caused to flow, under reforming conditions, in the presence of hydrogen, successively through two reaction zones, in at least the first of which said process takes place in accordance with one of claims 6 to 12.

14. Catalytic reforming process wherein a hydrocarbon charge is caused to flow, under reforming conditions, in the presence of hydrogen, successively through two reaction zones, in each of which said process takes place in accordance with one of claims 6 to 13.

FIG.1

FIG.2

EP 0 352 175 B1

## FIG.3

**FIG.4**

$F_2$

$l_2$

C

$F_1$

$F_1'$

C

C

52.3

C

$l_1$

C

52.2

52

$l_3$

52.1

$F_2'$

**FIG.8A**

**FIG.8B**

**FIG.8C**

**FIG.5**

54

G

C

53

52.3

52.2

52.1

G

52    51

**FIG.7**

**FIG.6**